(19) **Europäisches Patentamt / European Patent Office / Office européen des brevets**

(11) **EP 4 007 181 A1**

(12) **EUROPEAN PATENT APPLICATION**
published in accordance with Art. 153(4) EPC

(43) Date of publication:
**01.06.2022 Bulletin 2022/22**

(21) Application number: **20854008.8**

(22) Date of filing: **19.08.2020**

(51) International Patent Classification (IPC):
**H04B 7/06** $^{(2006.01)}$    **H04B 7/08** $^{(2006.01)}$
**H04W 4/02** $^{(2018.01)}$

(86) International application number:
**PCT/CN2020/110046**

(87) International publication number:
**WO 2021/032124 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2019 CN 201910780640**

(71) Applicant: **Oneplus Technology (Shenzhen) Co., Ltd.**
**Shenzhen, Guangdong 518000 (CN)**

(72) Inventors:
• **ZHONG, Yongwei**
  **Shenzhen, Guangdong, 518042 (CN)**
• **GU, Jiangbo**
  **Shenzhen, Guangdong, 518042 (CN)**

(74) Representative: **Ipside**
**7-9 Allées Haussmann**
**33300 Bordeaux Cedex (FR)**

(54) **BEAM SWITCHING METHOD, DEVICE, AND MOBILE TERMINAL**

(57)    Provided are a beam switching method, a device, and a mobile terminal, pertaining to the technical field of communications. The method comprises: measuring, at every first pre-determined time interval, a current signal strength of a current beam connected to a base station; if the current signal strength is greater than a pre-determined lower limit strength threshold, determining, on the basis of a change amplitude of the current signal strength and beam space-time correlations of the current beam with respect to all beams of a mobile terminal, a maximum signal strength corresponding to multiple candidate beams selected from all of the beams, wherein the beam space-time correlations are associated with an environment around the mobile terminal and a motion state thereof; and performing, on the basis of the maximum signal strength and the current signal strength, a switching operation on the beam of the mobile terminal that is connected to the base station. The present invention alleviates the technical problem of the prior art in which beam joining is tedious and power consuming.

```
┌────────────────────────────────────────────────────────────────┐
│ measuring a current signal strength of a current beam connected │── S102
│ to a base station every first preset period                     │
└────────────────────────────────────────────────────────────────┘
                              │
┌────────────────────────────────────────────────────────────────┐
│ in response to the current signal strength being greater than a │
│ preset strength lower limit threshold, determining a maximum    │
│ signal strength corresponding to a plurality of candidate beams │── S104
│ from all beams based on a change of the current signal strength │
│ and a beam spatiotemporal correlation between the current beam  │
│ and each of all the beams of the mobile terminal; wherein the   │
│ beam spatiotemporal correlation is associated with an           │
│ environment in which the mobile terminal is located and a       │
│ motion state of the mobile terminal                             │
└────────────────────────────────────────────────────────────────┘
                              │
┌────────────────────────────────────────────────────────────────┐
│ performing a switching operation on a beam connected between    │
│ the mobile terminal and the base station based on the maximum   │── S106
│ signal strength and the current signal strength                 │
└────────────────────────────────────────────────────────────────┘
```

FIG. 1

**EP 4 007 181 A1**

## Description

### TECHNICAL FIELD

The present disclosure relates to the field of communication technologies, and in particular to a beam switching method, a device, and a mobile terminal.

### BACKGROUND

The fifth generation (5G) communication technology includes a millimeter wave frequency band (24250MHz-52600MHz, which may be extended to higher frequency bands). In order to overcome the disadvantage of high electromagnetic wave propagation loss in the millimeter wave frequency band, an array antenna is applied in the 5G millimeter wave terminal to meet Peak EIRP requirements of the 3GPP standard. In order to overcome the shortcomings of the narrow beam of the array antenna, beam scanning technology is adopted to improve the spatial coverage of the beam. In the communication process, the 5G millimeter wave terminal is required to perform beam scanning to maintain the connection with the base station beam, and the beam docking method directly affects the signal quality and power consumption. The existing docking method mainly relies on the control of the base station side, and optimizes the protocol stack and coding, while the docking takes a long time and consumes a lot of power.

### SUMMARY OF THE DISCLOSURE

The present disclosure provides a beam switching method, a device, and a mobile terminal to alleviate the technical problems of long beam docking time and high power consumption in the prior art.

The present disclosure provides a beam switching method, applied to a mobile terminal and comprising: measuring a current signal strength of a current beam connected to a base station every first preset period; in response to the current signal strength being greater than a preset preset-strength-lower threshold, determining a maximum signal strength corresponding to a plurality of candidate beams from all beams of the mobile terminal based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and performing a switching operation on a beam connected between the mobile terminal and the base station based on the maximum signal strength and the current signal strength.

Further, the determining the maximum signal strength corresponding to the plurality of candidate beams from all the beams of the mobile terminal based on the change of the current signal strength and the beam spatiotemporal correlation between the current beam and each of all the beams of the mobile terminal comprises: obtaining the beam spatiotemporal correlation between each of all the beams of the mobile terminal in the environment in which the mobile terminal is located and the current beam; arranging all the beams in order according to the beam spatiotemporal correlation; selecting the plurality of candidate beams with a preset number from all the beams arranged in order based on the change of the current signal strength and a moving speed of the mobile terminal; and measuring signal strengths corresponding to the plurality of candidate beams to obtain a measurement result, and determining a maximum signal strength in the measurement result as the maximum signal strength corresponding to the plurality of candidate beams.

Further, the obtaining the beam spatiotemporal correlation between each of all the beams of the mobile terminal in the environment in which the mobile terminal is located and the current beam comprises: obtaining the environment in which the mobile terminal is located and the motion state of the mobile terminal every second preset period, wherein the motion state comprises: a moving speed and a moving direction; determining whether the moving speed is less than a preset speed threshold; in response to the moving speed being less than the preset speed threshold, obtaining a spatial correlation between each of all the beams of the mobile terminal in the environment and the current beam, and taking the spatial correlation between each of all the beams of the mobile terminal in the environment and the current beam as the beam spatiotemporal correlation between a corresponding beam of the mobile terminal in the environment and the current beam; and in response to the moving speed being greater than or equal to the preset speed threshold, weighting the spatial correlation between each of all the beams of the mobile terminal in the environment and the current beam based on the motion state, and generating the beam spatiotemporal correlation between each of all the beams of the mobile terminal in the environment and the current beam.

Further, the weighting the spatial correlation between each of all the beams of the mobile terminal in the environment and the current beam based on the motion state, and generating the beam spatiotemporal correlation between each of all the beams of the mobile terminal in the environment and the current beam comprise: calculating the beam spatiotemporal correlation between each of all the beams of the mobile terminal in the environment and the current beam through the following matrix relationship:

$$\left[ SC_{dynamic} \right] = \left[ SC_{static} \right] + \left[ I_{space} \right] \times \left[ S_{weight} \right];$$

where [$SC_{dynamic}$] represents the beam spatiotemporal correlation between each of all the beams of the mobile terminal in the environment and the current beam; [$SC_{static}$] represents the spatial correlation between each of all the beams of the mobile terminal in the environment and the current beam; [$I_{space}$] represents a position relationship between each of all the beams of the mobile terminal in the environment and the current beam; and [$S_{weight}$] represents a weight corresponding to the motion state.

Further, the selecting the plurality of candidate beams with the preset number from all the beams arranged in order based on the change of the current signal strength and a moving speed of the mobile terminal comprises: in response to the change of the current signal strength being within a preset strength range, performing selecting every specified number of beams from all the beams arranged in order to obtain a preset number of beams as first candidate beams, wherein the beam spatiotemporal correlation between each of the selected beams and the current beam is greater than the beam spatiotemporal correlation between any unselected beam and the current beam; and in response to the change of the current signal strength being greater than a maximum value of the preset strength range, performing selecting every specified number of beams from all the beams arranged in order to obtain a preset number of beams as second candidate beams, wherein the beam spatiotemporal correlation between each of the selected beams and the current beam is less than the beam spatiotemporal correlation between any unselected beam and the current beam; wherein the specified number and the preset number are both proportional to the current moving speed.

Further, the performing the switching operation on the current beam connected between the mobile terminal and the base station based on the maximum signal strength and the current signal strength comprises: determining whether the maximum signal strength is greater than the current signal strength; in response to the maximum signal strength being greater than the current signal strength and in response to a difference between the maximum signal strength and the current signal strength being greater than a preset beam-switching threshold, switching the current beam to a beam corresponding to the maximum signal strength; and in response to the maximum signal strength being less than or equal to the current signal strength, updating a maximum value of signal strengths of all the beams of the mobile terminal in the environment to the maximum signal strength, and continuing to perform the determining whether the maximum signal strength is greater than the current signal strength.

Further, the method further includes: in response to the maximum signal strength being greater than the current signal strength and in response to the difference between the maximum signal strength and the current signal strength being less than the preset beam-switching threshold, determining whether the maximum signal strength is the maximum value of signal strengths of all the beams of the mobile terminal in the environment; in response to the maximum signal strength being the maximum value of signal strengths of all the beams of the mobile terminal in the environment, maintaining a connection between the current beam and the base station; and in response to the maximum signal strength being not the maximum value of signal strengths of all the beams of the mobile terminal in the environment, updating the maximum value of signal strengths of all the beams of the mobile terminal in the environment to the maximum signal strength, and continuing to perform the determining whether the maximum signal strength is greater than the current signal strength.

Further, the method further includes: measuring a maximum power transmission limit (MTPL) of the current beam every first preset period; in response to the current signal strength being greater than the preset preset-strength-lower threshold and the change of the current signal strength being less than a lowest value of the preset strength range, determining whether the MTPL is less than a maximum power transmission limit threshold; in response to the MTPL being less than the maximum power transmission limit threshold, maintaining a connection between the current beam and the base station; and in response to the MTPL being greater than or equal to the maximum power transmission limit threshold, continuing to perform the determining whether the maximum signal strength is greater than the current signal strength.

Further, the method further includes: in response to the current signal strength being less than the preset preset-strength-lower threshold, scanning all the beams of all the beams of the mobile terminal in the environment, taking a beam with the highest signal strength among all the beams as a target switching beam, and switching the current beam to the target switching beam such that the target switching beam is connected to the base station.

The present disclosure further provides a beam switching device, applied to a mobile terminal and comprising: an information measurement module, configured to measure a current signal strength of a current beam connected to a base station every first preset period; a maximum signal strength determination module, configured to, in response to the current signal strength being greater than a preset preset-strength-lower threshold, determine a maximum signal strength corresponding to a plurality of candidate beams from all beams of the mobile terminal based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and a beam switching module, configured to perform a switching operation on a beam connected between the mobile terminal and the base station based on the maximum signal strength and the current signal strength.

Further, the maximum signal strength determination module comprises: a correlation obtaining module, configured to obtain the beam spatiotemporal correlation between each of all the beams of the mobile terminal in the environment in which the mobile terminal is located and the current beam; a beam ordering module, configured to arrange all the beams in order according to the beam spatiotemporal correlation; a beam selection module, configured to select the plurality of candidate beams with a preset number from all the beams arranged in order based on the change of the current signal strength and a moving speed of the mobile terminal; and a signal measurement module, configured to measure signal strengths corresponding to the plurality of candidate beams to obtain a measurement result, and determining a maximum signal strength in the measurement result as the maximum signal strength corresponding to the plurality of candidate beams.

The present disclosure further provides a mobile terminal, comprising: a scene recognizer, a spatial information sensor, a plurality of millimeter wave antenna modules, and the beam switching device as described above; wherein the beam switching device is connected to the scene recognizer, the spatial information sensor, and the plurality of millimeter wave antenna modules; each millimeter wave antenna module is configured to perform a plurality of millimeter wave beam scanning operations; the scene recognizer is configured to recognize the environment in which the mobile terminal is located; the spatial information sensor is configured to collect the motion state of the mobile terminal.

The beam switching method, device and mobile terminal provided by the embodiments of the present disclosure includes or can perform: measuring a current signal strength of a current beam connected to a base station every first preset period; in response to the current signal strength being greater than a preset preset-strength-lower threshold, determining a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and performing a switching operation on a beam connected between the mobile terminal and the base station based on the maximum signal strength and the current signal strength. The beam spatiotemporal correlation is associated with the environment of the mobile terminal and the motion state of the mobile terminal, that is, the influence of the surrounding environment and the influence of the motion state of the mobile terminal are considered. In this way, the mobile terminal can determine the most suitable switching beam in the current environment and motion state of the terminal, so as to improve the stability of the signal connected between the terminal and the base station. In addition, the method selects some candidate beams from all beams to determine the maximum signal strength, which can reduce the scanning space, lower power consumption, reduce the switching time of the beams, and enable the mobile terminal to switch to the most suitable beam quickly.

## BRIEF DESCRIPTION OF THE DRAWINGS

To further illustrate technical solutions of embodiments of the present disclosure, drawings needed for description of the embodiments will be briefly introduced. Obviously, the following drawings are only some embodiments of the present disclosure. To those skilled in the art, other drawings may be obtained without any creative work based on the following drawings.

FIG. 1 is a flowchart of a beam switching method according to an embodiment of the present disclosure.
FIG. 2 is a flowchart of a beam switching method according to another embodiment of the present disclosure.
FIG. 3 is a flowchart of a beam switching method according to further another embodiment of the present disclosure.
FIG. 4 is a schematic view of establishing a dynamic correlation table according to an embodiment of the present disclosure.
FIG. 5 is a flowchart of a beam switching method according to further another embodiment of the present disclosure.
FIG. 6 is a flowchart of a beam switching method according to further another embodiment of the present disclosure.
FIG. 7 is a flowchart of a beam switching method according to further another embodiment of the present disclosure.
FIG. 8 is a structural schematic view of a beam switching device according to an embodiment of the present disclosure.
FIG. 9 is a structural schematic view of a beam switching device according to another embodiment of the present disclosure.
FIG. 10 is a structural schematic view of a mobile terminal according to an embodiment of the present disclosure.
FIG. 11 is a schematic view of a millimeter wave antenna module according to an embodiment of the present disclosure.

**DETAILED DESCRIPTION**

The technical solutions of the present disclosure will be clearly and completely described below in conjunction with embodiments. Obviously, the described embodiments are a part of the embodiments of the present disclosure, but not all of the embodiments. Based on the embodiments of the present disclosure, all other embodiments obtained by those skilled in the art without creative work shall fall within the scope of the present disclosure.

The fifth generation (5G) communication technology includes a millimeter wave frequency band (24250MHz-52600MHz, which may be extended to higher frequency bands). In order to overcome the disadvantage of high electromagnetic wave propagation loss in the millimeter wave frequency band, an array antenna is applied in the 5G millimeter wave terminal to meet Peak EIRP requirements of the 3GPP standard. In order to overcome the shortcomings of the narrow beam of the array antenna, beam scanning technology is adopted to improve the spatial coverage of the beam. In the communication process, the 5G millimeter wave terminal is required to perform beam scanning to maintain the connection with the base station beam, and the beam docking method directly affects the signal quality and power consumption.

The existing beam docking method mainly relies on the control of the base station side and the optimization of the protocol stack and coding, while ignores the role of the terminal and does not optimize a handover condition. The existing beam docking method does not fully consider and use the physical characteristics of the terminal millimeter wave beam, and not use the correlation between beams. In addition, the negative effects of the surrounding environment on the antenna are not considered. With these factors ignored, an excellent docking method will not be obtained, the docking takes a long time, and the power consumption is high.

Based on this, the embodiments of the present disclosure provide a beam switching method, a device, and a mobile terminal to alleviate the aforementioned technical problems of long beam docking time and high power consumption.

To facilitate the understanding of the embodiments, a beam switching method disclosed in an embodiment of the present disclosure is introduced in detail.

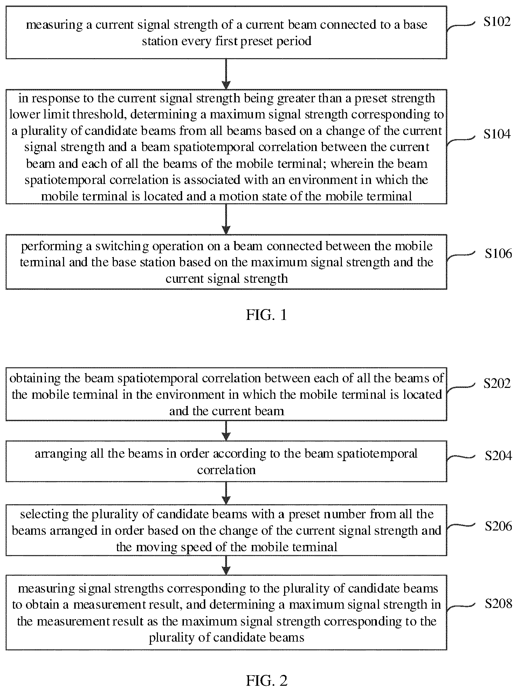

The embodiment of the present disclosure provides a beam switching method, which may be applied to beam switching scenes of multiple beams including a 5G millimeter wave. The method is executed by a mobile terminal. As shown in FIG. 1, the method specifically includes operations at blocks as followed.

At block S102: measuring a current signal strength of a current beam connected to a base station every first preset period.

During specific implementation, multiple millimeter wave antenna modules are arranged in the mobile terminal, and the number of beam scanning that may be performed by each millimeter wave antenna module is N. After the mobile terminal is connected to the base station through the current beam, the mobile terminal periodically measures the current signal strength of the current beam. The signal strength may be characterized by reference signal receiving power (RSRP). The first preset period, that is, a measurement period of the signal strength of the current beam, may be set according to actual conditions.

At block S104: in response to the current signal strength being greater than a preset preset-strength-lower threshold, determining a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal.

After the current signal strength of the current beam is measured, it is determined whether the current signal strength is greater than the preset preset-strength-lower threshold. When the current signal strength is less than the preset-strength-lower threshold, the signal strength of the current beam is already very poor, and signal loss may occur. When the current signal strength is greater than the preset-strength-lower threshold, the signal strength of the current beam is acceptable. In this case, the change of the current signal strength may be determined based on the signal strength of the current beam at a last measurement, which is a difference obtained by subtracting the current signal strength from the signal strength at the last measurement.

The beam spatiotemporal correlation is composed of spatial correlation and temporal correlation. The spatial correlation refers to the degree of similarity between beams, which may be described by envelope correlation coefficient (ECC). The temporal correlation refers to the adjustment of the beam spatial correlation caused by the movement of the mobile terminal. More specifically, the temporal correlation weights the beam spatial correlation. The beam spatiotemporal correlation is obtained by weighting the spatial correlation through the motion state of the mobile terminal in temporal dimension.

The beam spatiotemporal correlation between the current beam and each of all beams of the mobile terminal may be generated in real time based on the environment of the mobile terminal and the motion state of the mobile terminal, or may be found through a pre-established beam spatiotemporal correlation table. The beam spatiotemporal correlation table is also generated based on the environment of the mobile terminal and the motion state of the mobile terminal. The environment includes: free space scene, hand-held scene, head-handed scene, etc. Therefore, the beam spatiotemporal correlation is associated with the environment and motion state of the mobile terminal, that is, the determination process of the beam spatiotemporal correlation takes into account the influence of the surrounding environment and the influence of the motion state of the mobile terminal.

Based on the change of the current signal strength and the beam spatiotemporal correlation between the current beam and each of all beams of the mobile terminal, the maximum signal strength corresponding to the multiple candidate beams selected from all beams is determined. That is, with the influence of the surrounding environment of the mobile terminal and the influence of the motion state of the mobile terminal considered, some beams are screened from all the beams of the mobile terminal as candidate beams, that is, candidate switching beams. Further, the maximum signal strength is determined by measuring the signal strengths of the multiple candidate beams, thereby providing a reference for subsequent beam switching.

The process of determining the maximum signal strength is performed based on some screened-out beams based on the beam spatiotemporal correlations. Therefore, the beam scanning space, the beam switching time, and the power consumption may be reduced.

At block S106: performing a switching operation on a beam connected between the mobile terminal and the base station based on the maximum signal strength and the current signal strength.

After the mobile terminal determines the maximum signal strength, the mobile terminal compares the maximum signal strength with the current signal strength to determine whether to maintain the current beam connection based on a hysteresis strategy (wherein the hysteresis means that when the change is within a certain range, staying in the original state and not switching), or to switch the current beam to a beam corresponding to the maximum signal strength, or to perform other operations.

The beam switching method provided by the embodiment of the present disclosure includes: measuring a current signal strength of a current beam connected to a base station every first preset period; in response to the current signal strength being greater than a preset preset-strength-lower threshold, determining a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and performing a switching operation on a beam connected between the mobile terminal and the base station based on the maximum signal strength and the current signal strength. The beam spatiotemporal correlation is associated with the environment of the mobile terminal and the motion state of the mobile terminal, that is, the influence of the surrounding environment and the influence of the motion state of the mobile terminal are considered. In this way, the mobile terminal can determine the most suitable switching beam in the current environment and motion state of the terminal, so as to improve the stability of the signal connected between the terminal and the base station. In addition, the method selects some candidate beams from all beams to determine the maximum signal strength, which can reduce the scanning space, lower power consumption, reduce the switching time of the beams, and enable the mobile terminal to switch to the most suitable beam quickly.

In the above method, the way of determining the maximum signal strength, that is, the way of determining the suitable beam to be switched, is the focus of this solution. The following describes the process of determining the maximum signal strength in detail, as shown in FIG 2, which specifically includes operations at blocks as followed.

At block S202: obtaining the beam spatiotemporal correlation between each of all the beams of the mobile terminal in the environment in which the mobile terminal is located and the current beam.

The method of obtaining the beam spatiotemporal correlation may be directly generated based on the environment and motion state of the mobile terminal and the spatial correlation, or may be obtained by searching in the pre-established beam spatiotemporal correlation table.

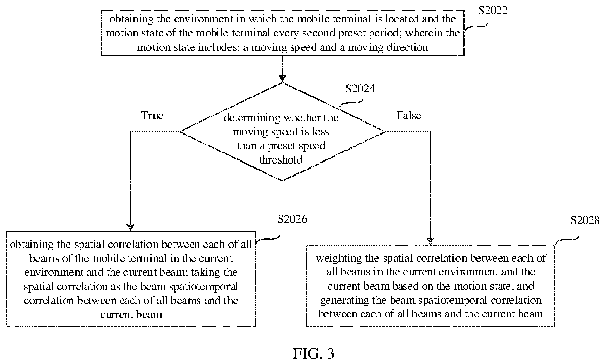

As shown in FIG. 3, the process of directly generating the beam spatiotemporal correlation between all beams of the mobile terminal and the current beam includes operations at blocks as followed.

At block S2022: obtaining the environment in which the mobile terminal is located and the motion state of the mobile terminal every second preset period; wherein the motion state includes: a moving speed and a moving direction.

The environment may be detected by a scene recognizer in the mobile terminal, and the environment may be one of a variety of usage scenes such as a free space scene, a hand-held scene, and a head-hand scene. The motion state may be collected by a spatial information sensor in the mobile terminal.

At block S2024: determining whether the moving speed is less than a preset speed threshold.

After obtaining the moving speed of the mobile terminal, it is further determined whether the speed is less than the preset speed threshold. The speed threshold may be set according to actual situations. Generally, the speed threshold will be set relatively small.

When the moving speed is less than the preset speed threshold, it means that the mobile terminal can almost be regarded as stationary. In this case, S2026 is performed to obtain the spatial correlation between each of all beams of the mobile terminal in the current environment and the current beam. The spatial correlation is taken as the beam spatiotemporal correlation between each of all beams and the current beam.

The spatial correlation may be obtained by direct measurement, for example, measuring the ECC between the beams and taking the ECC as the spatial correlation. In the embodiments, the mobile terminal pre-stores the spatial correlations between beams corresponding to various terminal usage scenes. The mobile terminal can find the spatial correlation between the corresponding beams based on the current environment, and further obtain the spatial correlation between each of all beams and the current beam. The spatial correlation between each of all beams and the current beam is taken as the beam spatiotemporal correlation between each of all beams and the current beam.

When the moving speed is greater than the preset speed threshold, the mobile terminal is in motion. In this case, S2028 is performed to weight the spatial correlation between each of all beams in the current environment and the current beam based on the motion state, and generate the beam spatiotemporal correlation between each of all beams and the current beam.

The specific weighting process may be calculated by the following matrix relationship to obtain the beam spatiotemporal correlation between each of all beams and the current beam.

$$\left[ SC_{dynamic} \right] = \left[ SC_{static} \right] + \left[ I_{space} \right] \times \left[ S_{weight} \right]$$

where $[SC_{dynamic}]$ represents the beam spatiotemporal correlation between each of all beams and the current beam; $[SC_{static}]$ represents the beam spatial correlation between each of all beams and the current beam; $[I_{space}]$ represents the position relationship between each of all beams and the current beam; and $[S_{weight}]$ represents the weight corresponding to the motion state.

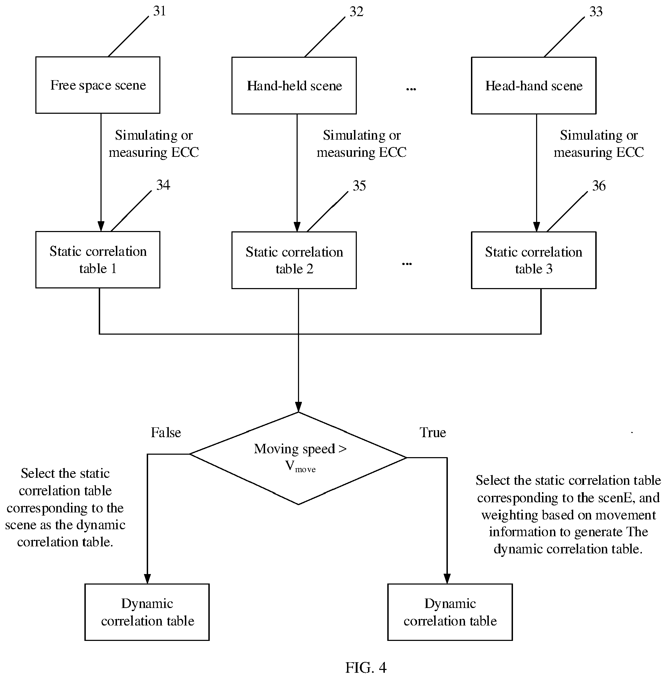

$[SC_{dynamic}]$ may also be regarded as a matrix corresponding to a dynamic correlation table, and $[SC_{static}]$ as a matrix corresponding to a static correlation table. For example, a method of establishing a beam correlation table provided by an embodiment of the present disclosure is shown in FIG. 4. Reference numerals 31, 32, and 33 in the FIG. 4 respectively represent three use scenes of the mobile terminal: free space scene, hand-held scene, and head-hand scene, that is, the environment in which the mobile terminal is located. In each use scene, a directional map of each beam of each antenna module in the mobile terminal is obtained by electromagnetic simulation or microwave darkroom measurement, and the spatial correlation between each two beams is calculated. In a case that the spatial correlation is expressed by ECC, the spatial correlation can be obtained directly by measurement.

After obtaining the spatial correlation between the beams in each use scene, the static correlation table corresponding to each use scene can be generated as the reference numerals 34, 35, and 36 shown in FIG. 4. The static correlation table may be expressed in table 1 or matrix form.

Table 1

|  | Module 1 Beam 1 | Module 1 Beam 2 | ... | Module n Beam NN |
|---|---|---|---|---|
| Module 1 Beam 1 | 1 | SC1,1,1,2 | ... | SC1,1,n,NN |
| ... | ... | ... | ... | ... |
| Module n Beam NN | SCn,NN,1,1 | SCn,NN,1,2 | ... | 1 |

where $SC_{a,c,a,c}= 1$, that is, the correlation between the beam and the beam itself is 1; $SC_{a,c,b,d}=SC_{b,d,a,c}$, to reduce the workload of measurement or calculation.

The matrix form of the static correlation table is as follows:

$$\begin{bmatrix} 1 & SC_{1,1,1,2} & \cdots & SC_{1,1,n,NN} \\ \cdots & \cdots & \cdots & \cdots \\ SC_{n,NN,1,1} & \cdots & \cdots & 1 \end{bmatrix}$$

Every second preset period, that is, every period Perl in FIG. 3, the scene recognizer or scene sensor in the mobile terminal detects the current environment or usage scene of the mobile terminal, and the spatial information sensor gives the current motion state of the mobile terminal. The motion state may refer to movement information, including moving speed and moving direction. That is, the current environment and motion state of the mobile terminal are periodically obtained. The preset periodsize of the period may be set according to actual situations. When the spatial information sensor shows that the mobile terminal is at rest (moving speed<$V_{move}$, the value of $V_{move}$ is determined according to actual situations), the static correlation table corresponding to the current environment is selected as the dynamic correlation table. When the spatial information sensor shows that the terminal is in motion (moving speed>$V_{move}$), the static correlation table corresponding to the current environment is weighted to generate the dynamic correlation table. This process may be expressed by the following formula.

$$\left[ SC_{dynamic} \right] = \left[ SC_{static} \right] + \left[ I_{space} \right] \times \left[ S_{weight} \right]$$

where [$SC_{dynamic}$] represents a matrix corresponding to the dynamic correlation table; [$SC_{static}$] represents a matrix corresponding to the static correlation table; [$I_{space}$] represents a matrix of the position relationship between the beams, and [$S_{weight}$] represents the weight corresponding to the motion state (moving speed and moving direction). The dynamic correlation table obtained by modifying the static correlation table by this formula can achieve the following results: taking current beam $\alpha$ for connection as a reference, among other beams: the correlation between a beam along the moving direction and the beam $\alpha$ weakens, and the correlation between a beam against the moving direction and the beam $\alpha$ strengthens.

The matrix $I_{space}$ and matrix $S_{weight}$ may be expressed as followed.

$$I_{space} = \begin{bmatrix} \vec{1} & \vec{I}_{1,1,1,2} & \cdots & \vec{I}_{1,1,n,NN} \\ \cdots & \cdots & \cdots & \cdots \\ \vec{I}_{n,NN,1,1} & \cdots & \cdots & \vec{1} \end{bmatrix}$$

$$S_{weight} = \begin{bmatrix} -\vec{V}_{1,1} & -\vec{V}_{1,2} & \cdots & -\vec{V}_{n,NN} \\ \cdots & \cdots & \cdots & \cdots \\ -\vec{V}_{1,1} & \cdots & \cdots & -\vec{V}_{n,NN} \end{bmatrix}$$

$$\left[ I_{space} \right] \times \left[ S_{weight} \right] = \begin{bmatrix} -\vec{1} \times \vec{V}_{1,1} & -\vec{I}_{1,1,1,2} \times \vec{V}_{1,2} & \cdots & -\vec{I}_{1,1,n,NN} \times \vec{V}_{n,NN} \\ \cdots & \cdots & \cdots & \cdots \\ -\vec{I}_{1,NN,1,1} \times \vec{V}_{1,1} & \cdots & \cdots & -\vec{1} \times \vec{V}_{n,NN} \end{bmatrix}$$

where $\vec{V}_{a,c}$ represents a unit length vector of a plane projection of a velocity $\vec{V}$ on a terminal plane coordinate system with a main flap direction of a beam c of an antenna module $a$ as the x-axis. $\vec{I}_{a,c,b,d}$ represents a unit length vector of a main flap of a beam c of an antenna module $b$ on the terminal plane coordinate system with the main flap direction of the beam c of the antenna module $a$ as the x-axis.

Through the pre-established dynamic correlation table, that is, the beam spatiotemporal correlation table, it is also possible to determine the beam spatiotemporal correlation between each of all beams of the mobile terminal in the current environment and the current beam.

At block S204: arranging all the beams in order according to the beam spatiotemporal correlation.

After obtaining the beam spatiotemporal correlation between each of all beams of the mobile terminal in the current environment and the current beam, all the beams of the mobile terminal are arranged in order according to the magnitude of the beam spatiotemporal correlation. The arrangement may be in ascending order or in descending order.

At block S206: selecting the plurality of candidate beams with a preset number from all the beams arranged in order based on the change of the current signal strength and the moving speed of the mobile terminal.

Specifically, when the change of the current signal strength is within a preset strength range, selecting is performed every specified number of beams from all the beams arranged in order to obtain a preset number of beams as first candidate beams; the beam spatiotemporal correlation between each of the selected beams and the current beam is greater than the beam spatiotemporal correlation between any unselected beam and the current beam. When the change of the current signal strength is greater than a maximum value of the preset strength range, selecting is performed every specified number of beams from all the beams arranged in order to obtain a preset number of beams as second candidate beams; the beam spatiotemporal correlation between each of the selected beams and the current beam is less than the beam spatiotemporal correlation between any unselected beam and the current beam; the specified number and the preset number are both proportional to the current moving speed.

In other words, when the change of the current signal strength is relatively not too large, beams with relatively large spatiotemporal correlation with the current beam may be selected from all the beams, and the selection process is to select one beam every a specified number of beams, for a total of a preset number of beams. Since difference between beams with relatively similar beam spatiotemporal correlations will be relatively small, it is therefore necessary to separate several beams for beam selection, which may make it easier to find suitable beams, reduce the amount of calculation, and increase the response speed. In the same way, when the change of the current signal strength is relatively large, beams with relatively small spatiotemporal correlation with the current beam may be selected from all the beams, such that it will be easier to find suitable beams.

At block S208: measuring signal strengths corresponding to the plurality of candidate beams to obtain a measurement result, and determining a maximum signal strength in the measurement result as the maximum signal strength corresponding to the plurality of candidate beams.

After the mobile terminal determines the multiple candidate beams, the mobile terminal further measures the signal strength of each candidate beam to determine the maximum signal strength. Here, only a part of the beams are required to be scanned and the signal strengths of a part of the beams are measured. Therefore, the scanning space is reduced, the suitable beam can be found quickly, the beam switching time is reduced, and the power consumption is also reduced.

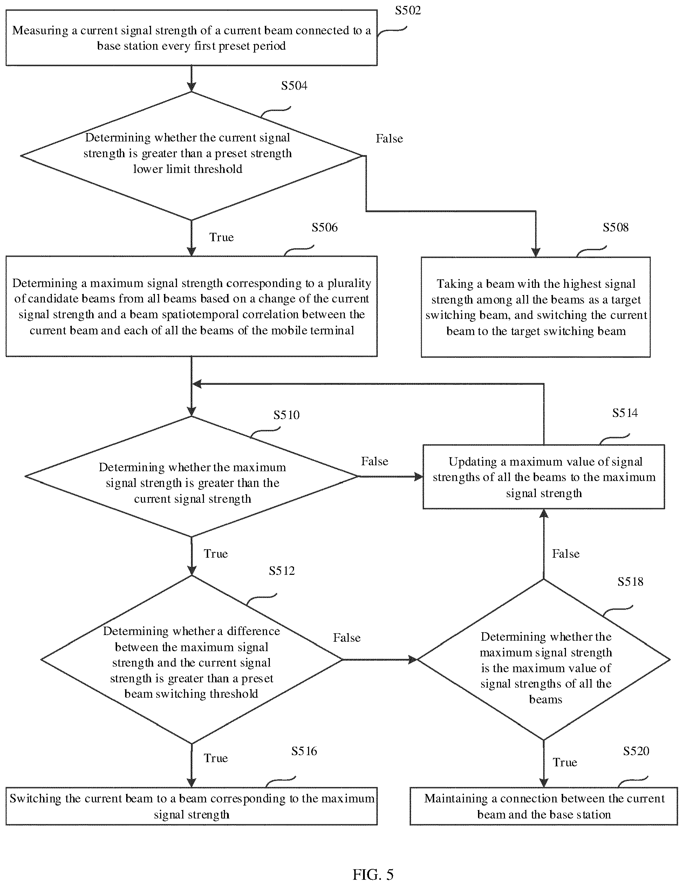

The process of switching the beam connected between the mobile terminal and the base station based on the maximum signal strength and the current signal strength will be the focus of the following description of the above beam switching method, referring to the flowchart of the beam switching method shown in FIG. 5, which includes operations at blocks as followed.

At block S502: measuring a current signal strength of a current beam connected to a base station every first preset period.

At block S504: determining whether the current signal strength is greater than a preset preset-strength-lower threshold.

When the current signal strength is greater than the preset preset-strength-lower threshold, S506 is performed to determine a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal. The process of determining the maximum signal strength here is the same as above, and will not be repeated here.

When the current signal strength is less than the preset preset-strength-lower threshold, S508 is perform to take a beam with the highest signal strength among all the beams as a target switching beam, and switch the current beam to the target switching beam. When the current signal strength is smaller than the preset preset-strength-lower threshold, the signal strength of the current beam is already very small, and signal loss may occur. In this case, all beams will be scanned directly, and the beam corresponding to the maximum signal strength will be determined from all the beams for the beam switching.

At block S510: determining whether the maximum signal strength is greater than the current signal strength.

When the maximum signal strength is greater than the current signal strength, S512 is performed to determine whether a difference between the maximum signal strength and the current signal strength is greater than a preset beam-switching threshold.

When the maximum signal strength is less than the current signal strength, S514 is performed to update a maximum value of signal strengths of all the beams to the maximum signal strength, and continue to perform S510: determining whether the maximum signal strength is greater than the current signal strength.

When the difference between the maximum signal strength and the current signal strength is greater than the preset beam-switching threshold, S516 is performed to switch the current beam to a beam corresponding to the maximum signal strength.

When the difference between the maximum signal strength and the current signal strength is less than the preset beam-switching threshold, S518 is performed to determine whether the maximum signal strength is the maximum value of signal strengths of all the beams.

When the maximum signal strength is the maximum value of signal strengths of all the beams, S520 is performed to maintain a connection between the current beam and the base station, and update beam information of the current beam to the current signal strength.

When the maximum signal strength is not the maximum value of signal strengths of all the beams, return to S514 to update the maximum value of signal strengths of all the beams to the maximum signal strength, and continue to perform S510: determining whether the maximum signal strength is greater than the current signal strength.

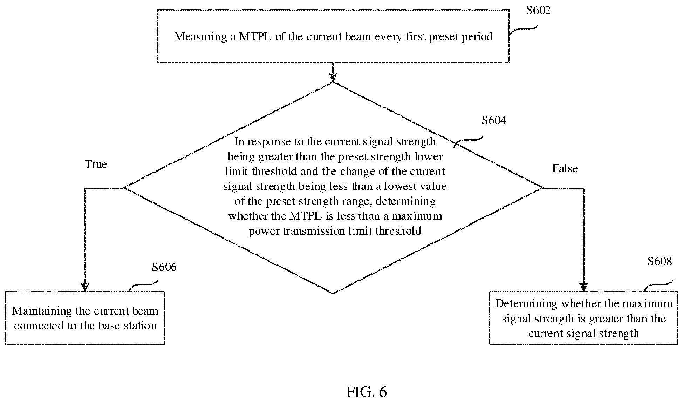

The method is still implemented on a mobile terminal as an example for description. On the basis of the beam switching method shown in FIG. 5, the beam switching method of this embodiment also includes a MTPL determination process. For details, reference may be made to the flow chart shown in FIG. 6.

At block S602: measuring a maximum power transmission limit (MTPL) of the current beam every first preset period. The first preset period is consistent with the aforementioned first preset period, that is, in this embodiment, the current signal strength and the MTPL of the current beam are periodically detected. Then, the beam switching is performed by comparing the current signal strength and MTPL information with thresholds.

At block S604: in response to the current signal strength being greater than the preset preset-strength-lower threshold and the change of the current signal strength being less than a lowest value of the preset strength range, determining whether the MTPL is less than a maximum power transmission limit threshold.

When the MTPL is less than the maximum power transmission limit threshold, S606 is performed to maintain the current beam connected to the base station. In this case, the beam information of the current beam may also be updated to the current signal strength.

When the MTPL is greater than or equal to the maximum power transmission limit threshold, S608 is continued to be performed to determine whether the maximum signal strength is greater than the current signal strength. S608 is the same as S502, and then the determination process after S502 is continued, which will not be repeated here.

This embodiment compares the current signal strength and MTPL information of the current beam connected to the base station with corresponding thresholds to determine the beam switching, which may, based on the hysteresis concept, optimize the switching conditions and balance the number of switching and signal quality. The physical characteristics of the terminal millimeter wave beams and the spatiotemporal correlation between the beams are adopted, considering the influence of the surrounding environment of the terminal, thereby reducing the scanning space, reducing the switching time, and reducing the power consumption.

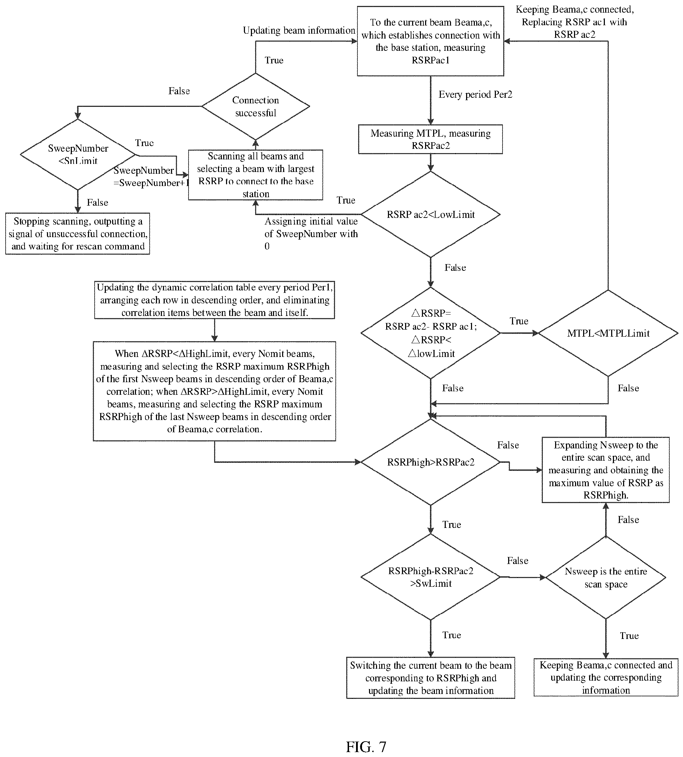

The following is a specific application implementation, where the signal strength is represented by RSRP. As shown in FIG. 7, it is assumed that the mobile terminal has been connected to the base station, the beam currently used is the beam c of the a-th millimeter wave antenna module, that is, Beam a,c, and the corresponding RSRP is RSRP ac1.

RSRP is measured every period Per2, named RSRPac2. The period Per2 may be determined according to actual situations. MTPL is measured at the same time, MTPL is the proportion when the uplink transmit power reaches the maximum value within a preset period period.

When RSRPac2<LowLimit (such as the preset-strength-lower threshold), all the beams are scanned and the beam with the highest RSRP is selected to connect to the base station. When the connection is unsuccessful, SnLimit (scanning times threshold) times of full-scan spatial scanning are repeated. When the connection is still unsuccessful, the scanning is stopped, a connection unsuccessful signal is output, and stands by until receiving a reconnection command. The values of LowLimit and SnLimit are determined according to actual situations.

When RSRPac2>LowLimit, it is calculated that $\Delta$RSRP=RSRPac2-RSRP ac1. When $\Delta$RSRP<$\Delta$lowLimit and MTPL<MTPLLimit, Beam a,c is maintained to be connected, and RSRP ac1 value is updated to RSRPac2. The values of $\Delta$lowLimit and MTPLLimit are determined according to actual situations.

In this embodiment, the dynamic correlation table is updated every period Per1, the spatiotemporal correlations of each row or column of the beams in the table are arranged in descending order, and the correlation items of the beams and themselves are eliminated. When $\Delta$RSRP<$\Delta$HighLimit, every Nomit beams, measurement is performed and first Nsweep beams of the beams arranged in descending order of the beam spatiotemporal correlations with Beam a,c are selected, and the RSRP maximum value of the first Nsweep beams is taken as RSRPhigh. When $\Delta$RSRP>$\Delta$HighLimit, every Nomit beams, measurement is performed and last Nsweep beams of the beams arranged in descending order of the beam spatiotemporal correlations with Beam a,c are selected, and the RSRP maximum value of the last Nsweep beams is taken as RSRPhigh. The values of $\Delta$HighLimit and Nsweep are determined according to actual situations, and $\Delta$highLimit should reflect the significant degradation of signal quality caused by operations such as mobile terminal flipping. The update time and update cycle of the dynamic correlation table are determined according to actual situations, but they are required to be completed before using the RSRPhigh procedure described below. Nomit relies on the moving speed of the mobile terminal, and Nomit$\geq$0. The purpose of introducing Nomit is to describe: a beam with the highest correlation has a high probability of being the spatial nearest neighbor beam. When the terminal is moving fast, the nearest neighbor beam may not be the best docking beam.

When $\Delta$RSRP<$\Delta$lowLimit and MTPL>MTPLLimit, it is determined whether RSRPhigh is greater than RSRPac2. When RSRPhigh<RSRPac2, Nsweep (number of scans) is expanded to the entire scan space, measurement is performed and the maximum RSRP value RSRPhigh is obtained. Then it is determined whether RSRPhigh is greater than RSRPac2. When this process is aborted more than a certain number of times, and the beam Beam a,c connection is maintained. The value of MTPLLimit is determined according to actual situations.

When $\Delta$RSRP>$\Delta$lowLimit, RSRPhigh>RSRPac2, and RSRPhigh-RSRPac2>SwLimit (i.e. beam-switching threshold), the beam is switched to the beam corresponding to RSRPhigh. When RSRPhigh-RSRPac2<SwLimit, and Nsweep is the entire scan space, the beam Beam a, c connection is maintained, and the corresponding beam information is updated. When Nsweep is not the entire scan space, Nsweep is expanded to the entire scan space, measurement is performed and the maximum RSRP value RSRPhigh is obtained. Then it is determined whether RSRPhigh is greater than RSRPac2 and whether RSRPhigh-RSRPac2 is greater than SwLimit. When this process is aborted more than a certain number of times, and the beam Beam a,c connection is maintained.

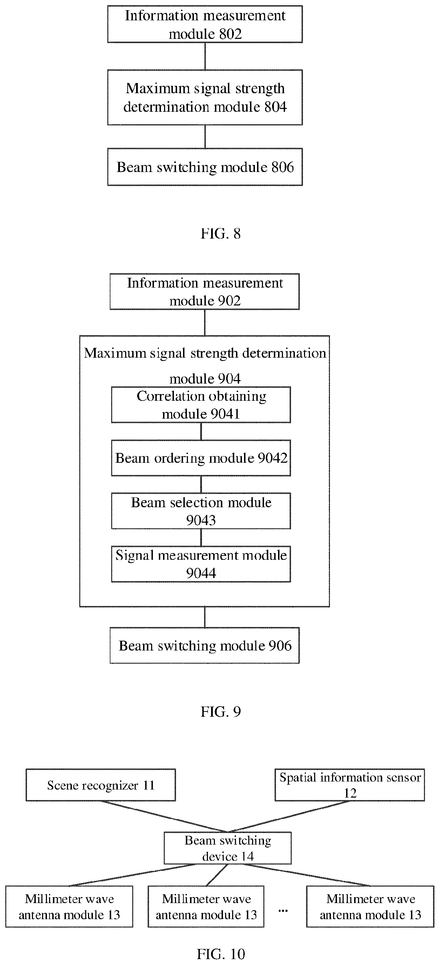

Based on the above method embodiments, the present disclosure also provides a beam switching device, which is applied to a mobile terminal. As shown in FIG. 8, the device includes: an information measurement module 802, a maximum signal strength determination module 804, and a beam switching module 806.

The information measuring module 802 is configured to measure a current signal strength of a current beam connected to a base station every first preset period. The maximum signal strength determining module 804 is configured to, in response to the current signal strength being greater than a preset preset-strength-lower threshold, determine a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal. The beam switching module 806 is configured to perform a switching operation on a beam connected between the mobile terminal and the base station based on the maximum signal strength and the current signal strength.

In other embodiments, referring to FIG. 9, the beam switching device includes an information measurement module 902, a maximum signal strength determination module 904, and a beam switching module 906 similar to the above.

The maximum signal strength determining module 904 specifically includes: a correlation obtaining module 9041 configured to obtain the beam spatiotemporal correlation between each of all the beams of the mobile terminal in the environment in which the mobile terminal is located and the current beam; and a beam ordering module 9042 configured to arrange all the beams in order according to the beam spatiotemporal correlation; a beam selection module 9043 configured to select the plurality of candidate beams with a preset number from all the beams arranged in order based on the change of the current signal strength and the moving speed of the mobile terminal; and a signal measurement module 9044 configured to measure signal strengths corresponding to the plurality of candidate beams to obtain a measurement result, and determine a maximum signal strength in the measurement result as the maximum signal strength corresponding to the plurality of candidate beams.

The correlation obtaining module 9041 is further configured to: obtain the environment in which the mobile terminal is located and the motion state of the mobile terminal every second preset period, wherein the motion state includes: a moving speed and a moving direction; determine whether the moving speed is less than a preset speed threshold; in response to the moving speed being less than the preset speed threshold, obtain the spatial correlation between each of all beams of the mobile terminal in the current environment and the current beam, and take the spatial correlation as the beam spatiotemporal correlation between each of all beams and the current beam; and in response to the moving speed being greater than or equal to the preset speed threshold, weight the spatial correlation between each of all beams in the current environment and the current beam based on the motion state, and generate the beam spatiotemporal correlation between each of all beams and the current beam.

The correlation obtaining module 9041 is further configured to calculate the beam spatiotemporal correlation between each of all beams and the current beam through the following matrix relationship:

$$\left[ SC_{dynamic} \right] = \left[ SC_{static} \right] + \left[ I_{space} \right] \times \left[ S_{weight} \right].$$

where $[SC_{dynamic}]$ represents the beam spatiotemporal correlation between each of all beams and the current beam; $[SC_{static}]$ represents the beam spatial correlation between each of all beams and the current beam; $[I_{space}]$ represents the position relationship between each of all beams and the current beam; and $[S_{weight}]$ represents the weight corresponding to the motion state.

The beam selection module 9043 is further configured to: in response to the change of the current signal strength being within a preset strength range, perform selecting every specified number of beams from all the beams arranged in order to obtain a preset number of beams as first candidate beams, wherein the beam spatiotemporal correlation between each of the selected beams and the current beam is greater than the beam spatiotemporal correlation between any unselected beam and the current beam; in response to the change of the current signal strength being greater than a maximum value of the preset strength range, perform selecting every specified number from all the beams arranged in order to obtain a preset number of beams as second candidate beams, wherein the beam spatiotemporal correlation between each of the selected beams and the current beam is less than the beam spatiotemporal correlation between any unselected beam and the current beam; the specified number and the preset number are both proportional to the current moving speed.

The beam switching module 906 is further configured to: determine whether the maximum signal strength is greater than the current signal strength; in response to the maximum signal strength being greater than the current signal strength and in response to a difference between the maximum signal strength and the current signal strength being greater than a preset beam-switching threshold, switch the current beam to a beam corresponding to the maximum signal strength; in response to the maximum signal strength being less than or equal to the current signal strength, update a maximum value of signal strengths of all the beams to the maximum signal strength, and continue to determine whether the maximum signal strength is greater than the current signal strength.

The beam switching module 906 is further configured to: in response to the maximum signal strength being greater than the current signal strength and in response to the difference between the maximum signal strength and the current signal strength being less than the preset beam-switching threshold, determine whether the maximum signal strength is the maximum value of signal strengths of all the beams; in response to the maximum signal strength being the maximum value of signal strengths of all the beams, maintain a connection between the current beam and the base station; in response to the maximum signal strength being not the maximum value of signal strengths of all the beams, update the maximum value of signal strengths of all the beams to the maximum signal strength, and continue to determine whether the maximum signal strength is greater than the current signal strength.

The information measurement module 902 is further configured to measure a maximum power transmission limit (MTPL) of the current beam every first preset period. The beam switching module 906 is further configured to: in response to the current signal strength being greater than the preset preset-strength-lower threshold and the change of the current signal strength being less than a lowest value of the preset strength range, determine whether the MTPL is less than a maximum power transmission limit threshold; in response to the MTPL being less than the maximum power transmission limit threshold, maintain the current beam connected to the base station; and in response to the MTPL being greater than or equal to the maximum power transmission limit threshold, continue to determine whether the maximum signal strength is greater than the current signal strength.

The beam switching module 906 is further configured to: in response to the current signal strength being less than the preset preset-strength-lower threshold, scan all the beams, take a beam with the highest signal strength among all the beams as a target switching beam, and switch the current beam to the target switching beam.

In order to clearly illustrate the implementation process of the embodiments of the present disclosure, the present disclosure also provides a mobile terminal. As shown in FIG. 10, the mobile terminal includes: a scene recognizer 11, a spatial information sensor 12, multiple millimeter wave antenna modules 13, and the beam switching device 14 as described in the above embodiments.

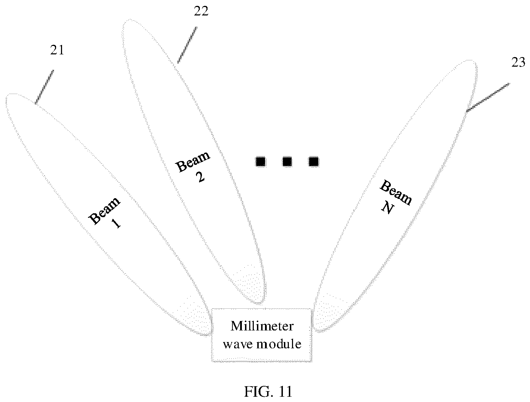

The beam switching device 14 is connected to the scene recognizer 11, the spatial information sensor 12, and multiple millimeter wave antenna modules 13 respectively; each millimeter wave antenna module 13, that is, the millimeter wave module as shown in FIG. 11, can perform multiple millimeter wave beam scanning, referring to reference numerals 21, 22, and 23 in FIG. 11, for beam 1, beam 2, and beam N; the scene recognizer 11 is configured to recognize the environment of the mobile terminal, such as recognizing usage scenes of hand holding, talking, etc.; the spatial information sensor 12 is configured to collect the motion state of the mobile terminal, including at least the moving direction and the moving speed. The spatial information sensor 12 may be composed of multiple components, and the components may be software that implements related functions, such as positioning software.

For the beam switching process of the mobile terminal, reference may be made to the foregoing method embodiments, and details are not described herein again.

The beam switching method, device, and computer program product of the mobile terminal provided by the embodiments of the present disclosure include a computer-readable storage medium storing a program code, and the instructions included in the program code may be configured to execute the methods described in the previous method embodiments. For the specific implementation of the method, reference may be made to the method embodiments, which will not be repeated here.

Those skilled in the art can clearly understand that, for the convenience and conciseness of description, the specific working process of the mobile terminal and device described above can refer to the corresponding process in the foregoing method embodiments, which will not be repeated here.

In addition, in the description of the embodiments of the present disclosure, unless otherwise clearly specified and limited, the terms "install", "connect", and "couple" are to be understood in a broad sense, for example, they can be fixed connection, removable connection, or integral connection; mechanical connection, or electrical connection; direct connection, or indirect connection through an intermediate medium, or internal connection of two components. For those skilled in the art, the specific meaning of the above terms in the context of the present disclosure can be understood in specific cases.

The functionality, when implemented in the form of a software functional unit and sold or used as a separate product, may be stored in a computer readable storage medium. Based on this understanding, the technical solution of the present disclosure, or the part of the technical solution that essentially contributes to the prior art, may be embodied in the form of a software product, stored in a storage medium, including a number of instructions to enable a computer device (which may be a personal computer, a server, or a network device, etc.) to perform all or some of the steps of the method described in various embodiments of the present disclosure. The storage medium may include: USB flash drive, removable hard disk, read-only memory (ROM), random access memory (RAM), disk or CD-ROM, and other mediums that can store program code.

Finally, it should be noted that the above embodiments, which are only specific implementations of the present disclosure, are intended to illustrate the technical solution of the present disclosure, not to limit it, and the scope of the present disclosure is not limited to the above embodiments. Despite the detailed description of the present disclosure with reference to the preceding embodiments, it should be understood by those skilled in the art that any person skilled in the art, within the technical scope disclosed by the present disclosure, can still make modifications or readily conceivable changes, or equivalent replacements of some technical features therein, to the technical solutions recorded in the preceding embodiments. These modifications, changes or replacements, which do not make the essence of the corresponding technical solutions out of the spirit and scope of the technical solutions of the embodiments of the present disclosure, shall be covered within the scope of the present disclosure. Therefore, the scope of the present disclosure shall be subject to the scope of the claims.

**Claims**

1. A beam switching method, applied to a mobile terminal and **characterized by** comprising:

   measuring a current signal strength of a current beam connected to a base station every first preset period;
   in response to the current signal strength being greater than a preset strength-lower-limit threshold, determining a maximum signal strength corresponding to a plurality of candidate beams from all beams of the mobile terminal based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and
   performing a switching operation on a beam connected between the mobile terminal and the base station based on the maximum signal strength and the current signal strength.

2. The method according to claim 1, wherein the determining the maximum signal strength corresponding to the plurality of candidate beams from all the beams of the mobile terminal based on the change of the current signal strength and the beam spatiotemporal correlation between the current beam and each of all the beams of the mobile terminal comprises:

   obtaining the beam spatiotemporal correlation between each of all the beams of the mobile terminal in the environment in which the mobile terminal is located and the current beam;
   arranging all the beams in order according to the beam spatiotemporal correlation;
   selecting the plurality of candidate beams with a preset number from all the beams arranged in order based on the change of the current signal strength and a current moving speed of the mobile terminal; and
   measuring signal strengths corresponding to the plurality of candidate beams, and determining a maximum signal strength in the measured signal strengths as the maximum signal strength corresponding to the plurality of candidate beams.

3. The method according to claim 2, wherein the obtaining the beam spatiotemporal correlation between each of all the beams of the mobile terminal in the environment in which the mobile terminal is located and the current beam comprises:

   obtaining the environment in which the mobile terminal is located and the motion state of the mobile terminal every second preset period, wherein the motion state comprises: a moving speed and a moving direction;
   determining whether the moving speed is less than a preset speed threshold;
   in response to the moving speed being less than the preset speed threshold, obtaining a spatial correlation between each of all the beams of the mobile terminal in the environment and the current beam, and taking the spatial correlation between each of all the beams of the mobile terminal in the environment and the current beam as the beam spatiotemporal correlation between a corresponding beam of the mobile terminal in the environment and the current beam; and
   in response to the moving speed being greater than or equal to the preset speed threshold, weighting the spatial correlation between each of all the beams of the mobile terminal in the environment and the current beam based on the motion state, and generating the beam spatiotemporal correlation between each of all the beams of the mobile terminal in the environment and the current beam.

4. The method according to claim 3, wherein the weighting the spatial correlation between each of all the beams of the mobile terminal in the environment and the current beam based on the motion state, and generating the beam spatiotemporal correlation between each of all the beams of the mobile terminal in the environment and the current beam comprise:

calculating the beam spatiotemporal correlation between each of all the beams of the mobile terminal in the environment and the current beam through the following matrix relationship:

$$\left[ SC_{dynamic} \right] = \left[ SC_{static} \right] + \left[ I_{space} \right] \times \left[ S_{weight} \right];$$

where [SC$_{dynamic}$] represents the beam spatiotemporal correlation between each of all the beams of the mobile terminal in the environment and the current beam; [SC$_{static}$] represents the spatial correlation between each of all the beams of the mobile terminal in the environment and the current beam; [I$_{space}$] represents a position relationship between each of all the beams of the mobile terminal in the environment and the current beam; and [S$_{weight}$] represents a weight corresponding to the motion state.

5. The method according to claim 2, wherein the selecting the plurality of candidate beams with the preset number from all the beams arranged in order based on the change of the current signal strength and a moving speed of the mobile terminal comprises:

in response to the change of the current signal strength being within a preset strength range, performing selecting every specified number of beams from all the beams arranged in order and obtaining a preset number of beams as first candidate beams, wherein the beam spatiotemporal correlation between each of the selected beams and the current beam is greater than the beam spatiotemporal correlation between any unselected beam and the current beam; and
in response to the change of the current signal strength being greater than a maximum value of the preset strength range, performing selecting every specified number of beams from all the beams arranged in order to obtain a preset number of beams as second candidate beams, wherein the beam spatiotemporal correlation between each of the selected beams and the current beam is less than the beam spatiotemporal correlation between any unselected beam and the current beam;
wherein the specified number and the preset number are both proportional to the current moving speed.

6. The method according to claim 1, wherein the performing the switching operation on the beam connected between the mobile terminal and the base station based on the maximum signal strength and the current signal strength comprises:

determining whether the maximum signal strength is greater than the current signal strength;
in response to the maximum signal strength being greater than the current signal strength and a difference between the maximum signal strength and the current signal strength being greater than a preset beam-switching threshold, switching the current beam to a beam corresponding to the maximum signal strength; and
in response to the maximum signal strength being less than or equal to the current signal strength, updating a maximum value of signal strengths of all the beams of the mobile terminal in the environment to the maximum signal strength, and continuing to perform the determining whether the maximum signal strength is greater than the current signal strength.

7. The method according to claim 6, further comprising:

in response to the maximum signal strength being greater than the current signal strength and the difference between the maximum signal strength and the current signal strength being less than the preset beam-switching threshold, determining whether the maximum signal strength is the maximum value of signal strengths of all the beams of the mobile terminal in the environment;
in response to the maximum signal strength being the maximum value of signal strengths of all the beams of the mobile terminal in the environment, maintaining a connection between the current beam and the base station; and
in response to the maximum signal strength being not the maximum value of signal strengths of all the beams of the mobile terminal in the environment, updating the maximum value of signal strengths of all the beams of the mobile terminal in the environment to the maximum signal strength, and continuing to perform the determining whether the maximum signal strength is greater than the current signal strength.

8. The method according to claim 6, further comprising:

measuring a maximum power transmission limit (MTPL) of the current beam every first preset period;
in response to the current signal strength being greater than the preset-strength-lower limit threshold and the change of the current signal strength being less than a lowest value of the preset strength range, determining whether the MTPL is less than a maximum power transmission limit threshold;
in response to the MTPL being less than the maximum power transmission limit threshold, maintaining a connection between the current beam and the base station; and
in response to the MTPL being greater than or equal to the maximum power transmission limit threshold, continuing to perform the determining whether the maximum signal strength is greater than the current signal strength.

9. The method according to claim 1, further comprising:
in response to the current signal strength being less than the preset preset-strength-lower threshold, scanning all the beams of all the beams of the mobile terminal in the environment, taking a beam with the maximum signal strength among all the beams as a target switching beam, and switching the current beam to the target switching beam such that the target switching beam is connected to the base station.

10. A beam switching device, applied to a mobile terminal and **characterized by** comprising:

an information measurement module, configured to measure a current signal strength of a current beam connected to a base station every first preset period;
a maximum signal strength determination module, configured to, in response to the current signal strength being greater than a preset preset-strength-lower threshold, determine a maximum signal strength corresponding to a plurality of candidate beams from all beams of the mobile terminal based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal; and
a beam switching module, configured to perform a switching operation on a beam connected between the mobile terminal and the base station based on the maximum signal strength and the current signal strength.

11. The device according to claim 10, wherein the maximum signal strength determination module comprises:

a correlation obtaining module, configured to obtain the beam spatiotemporal correlation between each of all the beams of the mobile terminal in the environment in which the mobile terminal is located and the current beam;
a beam ordering module, configured to arrange all the beams in order according to the beam spatiotemporal correlation;
a beam selection module, configured to select the plurality of candidate beams with a preset number from all the beams arranged in order based on the change of the current signal strength and a moving speed of the mobile terminal; and
a signal measurement module, configured to measure signal strengths corresponding to the plurality of candidate beams to obtain a measurement result, and determining a maximum signal strength in the measurement result as the maximum signal strength corresponding to the plurality of candidate beams.

12. The device according to claim 11, wherein the correlation obtaining module is further configured to:

obtain the environment in which the mobile terminal is located and the motion state of the mobile terminal every second preset period, wherein the motion state comprises: a moving speed and a moving direction;
determine whether the moving speed is less than a preset speed threshold;
in response to the moving speed being less than the preset speed threshold, obtain a spatial correlation between each of all the beams of the mobile terminal in the environment and the current beam, and take the spatial correlation between each of all the beams of the mobile terminal in the environment and the current beam as the beam spatiotemporal correlation between a corresponding beam of the mobile terminal in the environment and the current beam; and
in response to the moving speed being greater than or equal to the preset speed threshold, weight the spatial correlation between each of all the beams of the mobile terminal in the environment and the current beam based on the motion state, and generate the beam spatiotemporal correlation between each of all the beams of the mobile terminal in the environment and the current beam.

13. The device according to claim 12, wherein the correlation obtaining module is further configured to:

calculate the beam spatiotemporal correlation between each of all the beams of the mobile terminal in the environment and the current beam through the following matrix relationship:

$$\left[ SC_{dynamic} \right] = \left[ SC_{static} \right] + \left[ I_{space} \right] \times \left[ S_{weight} \right];$$

where [SC$_{dynamic}$] represents the beam spatiotemporal correlation between each of all the beams of the mobile terminal in the environment and the current beam; [SC$_{static}$] represents the spatial correlation between each of all the beams of the mobile terminal in the environment and the current beam; [I$_{space}$] represents a position relationship between each of all the beams of the mobile terminal in the environment and the current beam; and [S$_{weight}$] represents a weight corresponding to the motion state.

14. The device according to claim 11, wherein the beam selection module is further configured to:

in response to the change of the current signal strength being within a preset strength range, perform selecting every specified number of beams from all the beams arranged in order to obtain a preset number of beams as first candidate beams, wherein the beam spatiotemporal correlation between each of the selected beams and the current beam is greater than the beam spatiotemporal correlation between any unselected beam and the current beam; and
in response to the change of the current signal strength being greater than a maximum value of the preset strength range, perform selecting every specified number of beams from all the beams arranged in order to obtain a preset number of beams as second candidate beams, wherein the beam spatiotemporal correlation between each of the selected beams and the current beam is less than the beam spatiotemporal correlation between any unselected beam and the current beam;
wherein the specified number and the preset number are both proportional to the current moving speed.

15. The device according to claim 10, wherein the beam switching module is further configured to:

determine whether the maximum signal strength is greater than the current signal strength;
in response to the maximum signal strength being greater than the current signal strength and in response to a difference between the maximum signal strength and the current signal strength being greater than a preset beam-switching threshold, switch the current beam to a beam corresponding to the maximum signal strength; and
in response to the maximum signal strength being less than or equal to the current signal strength, update a maximum value of signal strengths of all the beams of the mobile terminal in the environment to the maximum signal strength, and continue to perform the determining whether the maximum signal strength is greater than the current signal strength.

16. The device according to claim 15, wherein the beam switching module is further configured to:

in response to the maximum signal strength being greater than the current signal strength and in response to the difference between the maximum signal strength and the current signal strength being less than the preset beam-switching threshold, determine whether the maximum signal strength is the maximum value of signal strengths of all the beams of the mobile terminal in the environment;
in response to the maximum signal strength being the maximum value of signal strengths of all the beams of the mobile terminal in the environment, maintain a connection between the current beam and the base station; and
in response to the maximum signal strength being not the maximum value of signal strengths of all the beams of the mobile terminal in the environment, update the maximum value of signal strengths of all the beams of the mobile terminal in the environment to the maximum signal strength, and continue to perform the determining whether the maximum signal strength is greater than the current signal strength.

**17.** The device according to claim 15, wherein the information measurement module is further configured to:

measure a maximum power transmission limit (MTPL) of the current beam every first preset period;
the beam switching module is further configured to:

in response to the current signal strength being greater than the preset preset-strength-lower threshold and the change of the current signal strength being less than a lowest value of the preset strength range, determine whether the MTPL is less than a maximum power transmission limit threshold;
in response to the MTPL being less than the maximum power transmission limit threshold, maintain a connection between the current beam and the base station; and
in response to the MTPL being greater than or equal to the maximum power transmission limit threshold, continue to perform the determining whether the maximum signal strength is greater than the current signal strength.

**18.** The device according to claim 11, wherein the beam switching module is further configured to:
in response to the current signal strength being less than the preset preset-strength-lower threshold, scan all the beams of all the beams of the mobile terminal in the environment, take a beam with the highest signal strength among all the beams as a target switching beam, and switch the current beam to the target switching beam such that the target switching beam is connected to the base station.

**19.** A mobile terminal, **characterized by** comprising: a scene recognizer, a spatial information sensor, a plurality of millimeter wave antenna modules, and the beam switching device according to any one of claims 10-18;

wherein the beam switching device is connected to the scene recognizer, the spatial information sensor, and the plurality of millimeter wave antenna modules;
each millimeter wave antenna module is configured to perform a plurality of millimeter wave beam scanning operations; the scene recognizer is configured to recognize the environment in which the mobile terminal is located; the spatial information sensor is configured to collect the motion state of the mobile terminal.

**20.** A non-transitory computer-readable storage medium, storing a computer program, **characterized in that** the computer program is executable to perform the method according to any one of claims 1 to 9.

measuring a current signal strength of a current beam connected to a base station every first preset period ⟶ S102

in response to the current signal strength being greater than a preset strength lower limit threshold, determining a maximum signal strength corresponding to a plurality of candidate beams from all beams based on a change of the current signal strength and a beam spatiotemporal correlation between the current beam and each of all the beams of the mobile terminal; wherein the beam spatiotemporal correlation is associated with an environment in which the mobile terminal is located and a motion state of the mobile terminal ⟶ S104

performing a switching operation on a beam connected between the mobile terminal and the base station based on the maximum signal strength and the current signal strength ⟶ S106

FIG. 1

obtaining the beam spatiotemporal correlation between each of all the beams of the mobile terminal in the environment in which the mobile terminal is located and the current beam ⟶ S202

arranging all the beams in order according to the beam spatiotemporal correlation ⟶ S204

selecting the plurality of candidate beams with a preset number from all the beams arranged in order based on the change of the current signal strength and the moving speed of the mobile terminal ⟶ S206

measuring signal strengths corresponding to the plurality of candidate beams to obtain a measurement result, and determining a maximum signal strength in the measurement result as the maximum signal strength corresponding to the plurality of candidate beams ⟶ S208

FIG. 2

EP 4 007 181 A1

S2022

obtaining the environment in which the mobile terminal is located and the motion state of the mobile terminal every second preset period; wherein the motion state includes: a moving speed and a moving direction

S2024

True      determining whether the moving speed is less than a preset speed threshold      False

S2026

obtaining the spatial correlation between each of all beams of the mobile terminal in the current environment and the current beam; taking the spatial correlation as the beam spatiotemporal correlation between each of all beams and the current beam

S2028

weighting the spatial correlation between each of all beams in the current environment and the current beam based on the motion state, and generating the beam spatiotemporal correlation between each of all beams and the current beam

FIG. 3

31

32

33

Free space scene

Hand-held scene

...

Head-hand scene

Simulating or
measuring ECC

Simulating or
measuring ECC

Simulating or
measuring ECC

34

35

36

Static correlation
table 1

Static correlation
table 2

...

Static correlation
table 3

False

Moving speed >
V$_{move}$

True

Select the static
correlation table
corresponding to the
scene as the dynamic
correlation table.

Select the static correlation table
corresponding to the scenE, and
weighting based on movement
information to generate The
dynamic correlation table.

Dynamic
correlation table

Dynamic
correlation table

FIG. 4

S502

Measuring a current signal strength of a current beam connected to a base station every first preset period

S504

Determining whether the current signal strength is greater than a preset strength lower limit threshold

False

True

S506

Determining a maximum signal strength corresponding to a plurality of candidate beams from all beams based on a change of the current signal strength and a beam spatiotemporal correlation between the current beam and each of all the beams of the mobile terminal

S508

Taking a beam with the highest signal strength among all the beams as a target switching beam, and switching the current beam to the target switching beam

S510

Determining whether the maximum signal strength is greater than the current signal strength

False

True

S514

Updating a maximum value of signal strengths of all the beams to the maximum signal strength

S512

Determining whether a difference between the maximum signal strength and the current signal strength is greater than a preset beam switching threshold

False

False

S518

Determining whether the maximum signal strength is the maximum value of signal strengths of all the beams

True

S516

Switching the current beam to a beam corresponding to the maximum signal strength

True

S520

Maintaining a connection between the current beam and the base station

FIG. 5

S602

Measuring a MTPL of the current beam every first preset period

S604

In response to the current signal strength being greater than the preset strength lower limit threshold and the change of the current signal strength being less than a lowest value of the preset strength range, determining whether the MTPL is less than a maximum power transmission limit threshold

True

False

S606

Maintaining the current beam connected to the base station

S608

Determining whether the maximum signal strength is greater than the current signal strength

FIG. 6

Updating beam information → To the current beam Beama,c, which establishes connection with the base station, measuring RSRPac1

Keeping Beama,c connected, Replacing RSRP ac1 with RSRP ac2

True

False ← Connection successful

SweepNumber <SnLimit

True

SweepNumber =SweepNumber+1

Scanning all beams and selecting a beam with largest RSRP to connect to the base station

False

Stopping scanning, outputting a signal of unsuccessful connection, and waiting for rescan command

Assigning initial value of SweepNumber with 0

Every period Per2

Measuring MTPL, measuring RSRPac2

True

RSRP ac2<LowLimit

False

Updating the dynamic correlation table every period Per1, arranging each row in descending order, and eliminating correlation items between the beam and itself.

$\triangle$RSRP= RSRP ac2- RSRP ac1; $\triangle$RSRP< $\triangle$lowLimit

True

MTPL<MTPLLimit

When $\triangle$RSRP<$\triangle$HighLimit, every Nomit beams, measuring and selecting the RSRP maximum RSRPhigh of the first Nsweep beams in descending order of Beama,c correlation; when $\triangle$RSRP>$\triangle$HighLimit, every Nomit beams, measuring and selecting the RSRP maximum RSRPhigh of the last Nsweep beams in descending order of Beama,c correlation.

False

False

RSRPhigh>RSRPac2

False

Expanding Nsweep to the entire scan space, and measuring and obtaining the maximum value of RSRP as RSRPhigh.

True

False

RSRPhigh-RSRPac2 >SwLimit

False

Nsweep is the entire scan space

True

Switching the current beam to the beam corresponding to RSRPhigh and updating the beam information

True

Keeping Beama,c connected and updating the corresponding information

FIG. 7

FIG. 8

FIG. 9

FIG. 10

FIG. 11

## INTERNATIONAL SEARCH REPORT

| International application No. |
| --- |
| **PCT/CN2020/110046** |

**A.    CLASSIFICATION OF SUBJECT MATTER**

H04B 7/06(2006.01)i;  H04B 7/08(2006.01)i;  H04W 4/02(2018.01)i

According to International Patent Classification (IPC) or to both national classification and IPC

**B.    FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; JPTXT; IEEE: 波束, 天线, 切换, 选择, 信号强度, 包络相关系数, 空间相关性, 移动, 手, 传感器, beam?, antenna?, switch+, select+, choose+, signal strength, envelope correlation, ECC, movement, space correlation, hand, sensor

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 110350965 A (SHENZHEN ONEPLUS TECHNOLOGY CO., LTD.) 18 October 2019 (2019-10-18)<br>claims 1-12, description, paragraphs 35-127 | 1-20 |
| A | CN 105281035 A (VIVO COMMUNICATION TECHNOLOGY CO., LTD.) 27 January 2016 (2016-01-27)<br>description, paragraphs 29-46 | 1-20 |
| A | CN 102710275 A (ZTE CORPORATION) 03 October 2012 (2012-10-03)<br>entire document | 1-20 |
| A | CN 109391984 A (VIVO COMMUNICATION TECHNOLOGY CO., LTD.) 26 February 2019 (2019-02-26)<br>entire document | 1-20 |
| A | US 10321463 B1 (DELL PRODUCTS L.P.) 11 June 2019 (2019-06-11)<br>entire document | 1-20 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 November 2020** | **17 November 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

| | International application No. |
|---|---|
| | **PCT/CN2020/110046** |

| Patent document cited in search report | | | Publication date (day/month/year) | Patent family member(s) | | | Publication date (day/month/year) |
|---|---|---|---|---|---|---|---|
| CN | 110350965 | A | 18 October 2019 | None | | | |
| CN | 105281035 | A | 27 January 2016 | CN | 105281035 | B | 01 March 2019 |
| CN | 102710275 | A | 03 October 2012 | US | 2015133066 | A1 | 14 May 2015 |
| | | | | MX | 2014013713 | A | 10 August 2015 |
| | | | | EP | 2849349 | A1 | 18 March 2015 |
| | | | | MX | 355901 | B | 03 May 2018 |
| | | | | EP | 2849349 | A4 | 03 June 2015 |
| | | | | US | 9439151 | B2 | 06 September 2016 |
| | | | | HK | 1202717 | A1 | 02 October 2015 |
| | | | | WO | 2013166777 | A1 | 14 November 2013 |
| | | | | KR | 20150013694 | A | 05 February 2015 |
| CN | 109391984 | A | 26 February 2019 | EP | 3668156 | A4 | 01 July 2020 |
| | | | | EP | 3668156 | A1 | 17 June 2020 |
| | | | | US | 2020178134 | A1 | 04 June 2020 |
| | | | | WO | 2019029609 | A1 | 14 February 2019 |
| US | 10321463 | B1 | 11 June 2019 | US | 2019281597 | A1 | 12 September 2019 |
| | | | | US | 10736118 | B2 | 04 August 2020 |

Form PCT/ISA/210 (patent family annex) (January 2015)